# EUROPÄISCHE PATENTSCHRIFT

(11) **EP 0 776 574 B1**
(45) Veröffentlichungstag und Bekanntmachung des Hinweises auf die Patenterteilung: **10.02.1999**
(21) Anmeldenummer: 95928442.3
(22) Anmeldetag: 18.08.1995
(51) Int. Cl.: H04N 7/46

(54) **VERFAHREN ZUR DECODIERUNG KOMPRIMIERTER VIDEO-DATEN MIT REDUZIERTEM SPEICHERBEDARF**
METHOD, REQUIRING REDUCED MEMORY CAPACITY, FOR DECODING COMPRESSED VIDEO DATA
PROCEDE DE DECODAGE DE DONNEES VIDEO COMPRIMEES, NE NECESSITANT QU'UN ENCOMBREMENT MEMOIRE REDUIT

(30) Priorität: 24.08.1994 DE 4430030
(43) Veröffentlichungstag der Anmeldung: 04.06.1997
(73) Patentinhaber: SIEMENS AKTIENGESELLSCHAFT, 80333 München (DE)
(72) Erfinder: PRANGE, Stefan, D-81476 München (DE); GEIB, Heribert, D-85567 Grafing (DE); HAMMER, Bernard, D-83539 Pfaffing (DE); PANDEL, Jürgen, D-83620 Feldkirchen-Westerham (DE)
(86) Internationale Anmeldenummer: DE9501093
(87) Internationale Veröffentlichungsnummer: WO9606506

(56) Entgegenhaltungen:
- EP-A- 0 553 515
- EP-A- 0 572 046
- EP-A- 0 576 289
- EP-A- 0 598 904

## Beschreibung

Die heutigen Standards zur Komprimierung von Video-Daten, z.B. ISO/IEC 11172-2 (MPEG1) oder ISO/IEC 13818-2 (MPEG2), verbinden die Prinzipien der Prädiktions- und Transformations-Codierung zur sogenannten Hybrid-Codierung. Die Prädiktion erfolgt dabei mit Hilfe einer sogenannten Differenz-Puls-Code-Modulations-Schleife (DPCM-Schleife), welche Differenzbilder durch Subtraktion prädizierter Bilddaten von den zu codierenden ursprünglichen Bilddaten erzeugt. Die in diesen Differenzbildern verbliebenen örtlichen Korrelationen zwischen benachbarten Bildpunkten werden mit Hilfe einer geeigneten Transformation, vorzugsweise mit Hilfe der Diskreten Cosinus Transformation (DCT), ausgenutzt. Die dabei entstehenden Transformationskoeffizienten werden anschließend einer Quantisierung unterzogen und nach Entropie-Codierung übertragen. Die grundsätzliche Arbeitsweise dieses Kompressionsverfahrens ist dem Fachmann aus verschiedenen Veröffentlichungen, z.B. aus [1], [2] und [3] bekannt.

Um die Qualität der Prädiktion in solchen Bildbereichen zu verbessern, in denen bewegte Objekte vorkommen, wird eine sogenannte bewegungskompensierte Prädiktion verwendet. Die Grundlagen der hierzu erforderlichen Bewegungsschätzung und ihre Anwendung zur bewegungskompensierten Prädiktion sind dem Fachmann z.B. aus [4] und [3] bekannt. Zusätzlich zur bewegungskompensierten Prädiktion ist bei den genannten standardisierten Verfahren zur Komprimierung von Video-Daten eine sogenannte bewegungskompensierte Interpolation vorgesehen. Die bewegungskompensierte Interpolation wird im Zusammenhang mit der MPEG-Terminologie auch als bidirektionale Prädiktion bezeichnet. Da diese Bezeichnung aber leicht mit der bewegungskompensierten Prädiktion verwechselt werden kann, wird im Rahmen dieser Anmeldung der Begriff bewegungskompensierte Interpolation bevorzugt. Durch den Einsatz der bewegungskompensierten Interpolation wird die Bildqualität entscheidend verbessert, da sie eine befriedigende Behandlung verdeckter Bildbereiche erlaubt und zu einer verbesserten Rauschunterdrückung beiträgt.

Es werden drei unterschiedlich codierte Arten von Bildern unterschieden. Sogenannte I-Bilder werden ohne zeitliche Prädiktion übertragen, sondern werden nur einer Intra-Bild-Codierung, vorzugsweise einer DCT-Codierung mit anschließender Quantisierung der Transformationskoeffizienten, unterzogen. Dabei soll im Rahmen dieser Patentanmeldung unter "Intra-Bild-Codierung" ganz allgemein jede zur Behandlung örtlicher Korrelationen in Bilddaten geeignete Methode verstandenen werden. Die sogenannten P-Bilder werden mit Hilfe der DPCM-Schleife aus zeitlich vorhergehenden I-Bildern oder P-Bildern prädiziert (Vorwärts-Prädiktion). Die Differenz zwischen präzidiertem Bild und tatsächlichem Bild wird einer Intra-Bild-Codierung, vorzugsweise einer DCT-Transformation mit anschließender Quantisierung der Transformationskoeffizienten, unterzogen. Zeitlich zwischen einem I-Bild und einem P-Bild oder zwischen zwei P-Bildern liegen sogenannte B-Bilder, welche im Rahmen der vorliegenden Patentanmeldung auch als "interpolierte Bilder" bezeichnet werden. B-Bilder werden durch (bidirektionale) bewegungskompensierte Interpolation aus einem zeitlich vorhergehenden I- oder P-Bild und einem zeitlich nachfolgenden I- oder P-Bild ermittelt. Dabei beziehen sich die Ausdrücke (zeitlich) "nachfolgend" bzw. "vorhergehend" nicht auf die Reihenfolge der Übertragung dieser Bilder im Datenstrom der komprimierten Bilder, sondern auf deren Aufnahme-/Wiedergabe-Reihenfolge. Ebenso wie P-Bilder, werden auch B-Bilder in Form von quantisierten Transformationskoeffizienten eines Differenzbildes codiert.

Zur Rekonstruktion eines B-Bildes durch bewegungskompensierte Interpolation aus einem zeitlich vorhergehenden I- oder P-Bild und einem zeitlich nachfolgenden I- oder P-Bild ist bei den derzeit bekannten Implementierungen eine Bereitstellung beider Referenzbilder (die in der Literatur gelegentlich auch als Stützbilder bezeichnet werden) in voll decodierter Form erforderlich. Es müssen also bei den zum Stand der Technik gehörenden Verfahren zur Durchführung der bewegungskompensierten Interpolation zwei voll decodierte Referenzbilder (I- oder P-Bilder) in einem Bildspeicher gespeichert werden. Weitere Speicherkapazität ist für dase Re-Interlacing bei der Bildausgabe erforderlich. Der insgesamt notwendige Speicher ist ein entscheidender Kostenfaktor der zur Decodierung und Encodierung verwendeten Hardware. Eine Reduzierung des benötigten Speichervolumens ist also wünschenswert.

Ein System, in dem ein Bildsignal auf der Basis von zwei Referenzbildern, nämlich zwei Halbbildern, dekodiert wird, ist aus der EP-A-0576 289 bekannt. Das erste Halbbild wird mit einem Halbbild von einem anderen Bild dekodiert, während das zweite Halbbild so verarbeitet wird, daß wenigstens ein Teil davon mit einer Prädiktion, die sich auf eines der beiden Bilder stützt, dekodiert wird.

Der Erfindung liegt die Aufgabe zugrunde, ein Verfahren zur Decodierung komprimierter Video-Daten mit reduziertem Speicherbedarf anzugeben. Diese Aufgabe wird erfindungsgemäß durch ein Verfahren zur Decodierung komprimierter Video-Daten mit reduziertem Speicherbedarf mit Merkmalen nach Anspruch 1 gelöst. Dabei wird für die Speicherung der Referenzbilddaten bei der Durchführung der Interpolation lediglich Speicherplatz in der Größe eines voll decodierten ersten Referenzbildes und eines komprimierten zweiten Referenzbildes benötigt. Die zu erwartende Speicherersparnis beträgt z.B. in einem typischen Anwendungsfall (MPEG2/Main Level/Main Profile) bei einer angenommenden typischen Kanaldatenrate von 10 Mbit/s mindestens 2,6 Mbit. Durch diese Einsparung von Speicherkapazität wird eine Integration des Codecs auf einem Chip wesentlich erleichtert oder gar erst möglich und dadurch entscheidend wirtschaftlicher in der Realisierung. Voraussetzung dafür ist allerdings eine hinreichend schnelle Hardware-Logik für die Decodierung/Encodierung bzw. falls dies nicht der Fall ist, eine Vervielfachung der entsprechenden Hardware-Logik-Schaltungen.

Kern der Erfindung ist es, anstelle der Speicherung der unkomprimierten Daten für das zweite Referenzbild lediglich die komprimierten Daten im (entsprechend vergrößerten) Eingangspuffer des Decoders bereitzuhalten. Zur Rekonstruktion eines B-Bildes zwischen zwei P- bzw. I-Bildern (i.a. zwischen zwei Referenzbildern) werden aus dem komprimierten Datenstrom lediglich gerade die Bildbereiche decodiert, die momentan für die Bildausgabe benötigt werden. Dies sind bei MPEG z.B. diejenigen Blöcke des zweiten Referenzbildes, welche mit dem zu ermittelnden Makroblock des interpolierten Bildes unter Berücksichtigung einer der Bewegungskompensation entsprechenden Verschiebung überlappen. Im Beispiel der Vollbild-Prädiktion werden für die Luminanzpixel eines zu decodierenden Makroblocks des zweiten Referenzbildes 9 Blöcke zu je 8 mal 8 Luminanzpixeln des ersten Referenzbildes benötigt.

Das Anwendungsgebiet der Erfindung umfaßt nicht nur die reine Decodierung sondern auch die Encodierung der Bilddaten, weil ein Encoder, der nach dem Prinzip der Prädiktion durch DPCM-Codierung arbeitet, immer einen Decoder beinhaltet, welcher die codierten Daten wieder decodiert, wodurch eine Berechnung von Differenzbildern in einer DPCM-Schleife erst ermöglicht wird [1].

Vorteilhafte Weiterbildungen der Erfindung ergeben sich aus den Unteransprüchen.

Vorteilhaft ist eine Ausführungsform der Erfindung, bei der zur Rekonstruktion und Ausgabe des zweiten Referenzbildes im Anschluß an die Ausgabe der interpolierten Bilder zunächst der für die Ausgabe dieser Bilder vorgesehene Speicherplatz benutzt wird, um das zweite Referenzbild unkomprimiert zu speichern.

Es ist ferner vorteilhaft, wenn
- im Anschluß daran der Speicher für das erste Referenzbild benutzt wird, um den verbleibenden Rest des zweiten Referenzbildes unkomprimiert zu speichern,
- der nicht mehr benötigte Rest des Speichers für das erste Referenzbild als Ausgabespeicher für das nachfolgende interpolierte Bild benutzt wird und wenn
- der Speicherbereich, der jetzt das vollständig unkomprimierte zweite Referenzbild aufgenommen hat, das erste Referenzbild für die Decodierung der zeitlich nachfolgenden interpolierten Bilder enthält.

Die Erfindung kann auch mit Hilfe einer Schaltungsanordnung zur Decodierung komprimierter Video-Daten, z.B. mit Merkmalen nach einem der Ansprüche ausgeführt werden.

Die Erfindung ist in keiner Weise auf den Bereich der Transformationskodierung, erst recht nicht auf den Bereich der blockweisen DCT-Codierung, beschränkt. Da über die Art der Intra-Bild-Codierung keine voraussetzenden Annahmen gemacht werden müssen, ist die Erfindung im Zusammenhang mit praktisch allen bekannten oder zukünftig zu entwickelnden Methoden der Intra-Bild-Codierung, z.B. auch im Zusammenhang mit der sogenannten Quadtree-Codierung oder im Zusammenhang mit Methoden auf der Grundlage von Objekt-Segmenten, anwendbar. Die entscheidende Voraussetzung für die Anwendbarkeit der Erfindung ist die (bidirektionale) bewegungskompensierte Interpolation.

Im folgenden wird die Erfindung anhand bevorzugter Ausführungsbeispiele und mit Hilfe der Figuren näher beschrieben.

Figur 1 zeigt in schematischer Weise ein Prinzip-Schaltbild für einen MPEG2-Video-Decoder, z.B. für digitales Fernsehen.

Figur 2 zeigt in schematischer Weise ein Prinzip-Schaltbild für einen MPEG2-Decoder mit verringertem Bildspeicherbedarf gemäß der vorliegenden Erfindung.

Figur 3 zeigt in schematischer Weise den Zusammenhang zwischen einem Makrobkock eines B-Bildes und den entsprechenden, per Bewegungskompensation verschobenen Makroblöcken der zugehörigen Referenzbilder.

Figur 4 zeigt in schematischer Weise die Aufteilung des Bildspeichers nach dem erfindungsgemäßen Verfahren.

In diesen Figuren stehen die verwendeten Bezugszeichen für folgende Begriffe:
- CDBS: Bitstrom der komprimierten Bilddaten
- BF: Buffer
- INVQ: inverse Quantisierung
- DCTC: Transformationskoeffizienten, DCT-Koeffizienten
- IDCT: inverse DCT
- MD: Bewegungsinformation, Bewegungsvektoren
- BSP: Bildspeicher
- RBv: Referenzblöcke für Vorwärtsprädiktion
- RBr: Referenzblöcke für Rückwärtsprädiktion
- BSYN: Bildsynthese
- DCMB: decodierter Makroblock
- AS: Bildausgabespeicher (für Re-Interlacing)
- YUVRGB: YUV/RGB-Umwandlung
- MON: Monitor
- HA: Header-Auswertung
- VRLD: Variable Längen-/Lauflängen-Decodierung
- MC: Bewegungskompensation
- ZGT: Zugriffstabelle auf einen Speicherbereich
- RB1, 2: Referenzbilder (Stützbilder)
- IB: interpoliertes Bild
- RF1: Referenzbild 1
- RF11: erste Hälfte des Referenzbildes 1
- RF12: zweite Hälfte des Referenzbildes 1

Die Codierung von Bildfolgen zum Zwecke der Datenkompression erfolgt nach einem Hybrid-DCT-Verfahren, d.h. die Ausnutzung der zeitlichen Korrelation der Bilder erfolgt durch zeitliche bewegungskompensierte Prädiktion, während die Ausnutzung der örtlichen Korrelation durch die diskrete Cosinus Transformation (DCT) gegeben ist. Diese DCT erfolgt auf Blöcken von 8 mal 8 Bildpunkten: Jeweils 4 Blöcke der Luminanz Y, 1 Block der Chrominanz U und 1 Block der Chrominanz V werden zu einem Makroblock zusammengefaßt, so daß ein solcher Makroblock in einem Farbbild 16 mal 16 Bildpunkte abdeckt. Makroblöcke einer Blockzeile können, müssen aber nicht, zu sogenannten Slices zusammengefaßt werden [2], [3]. Gemeinsame Informationen für diese Makroblöcke sind im Slice-Header enthalten.

Eine Folge von Video-Bildern wird vorzugsweise in Bildgruppen (Group of Pictures, GOP) eingeteilt, die z.B. 12 Bilder umfassen kann. Jede Bildgruppe beginnt mit einem Intra-Bildcodierten Bild - auch I-Bild genannt. Für die Datenkompression dieser Bilder wird nur die örtliche Korrelation genutzt; es erfolgt kein Rückgriff auf zurückliegende Bilder und auch kein Vorgriff auf zukünftige Bilder. Dieses I-Bild dient als Referenzbild für.ein zukünftiges zeitlich prädiziertes P-Bild. Diese Prädiktion erfolgt mit Hilfe der Bewegungskompensation. Übertragen wird der zeitliche Prädiktionsfehler als Intra-Bild-codiertes Differenzbild. Ein P-Bild dient wiederum als Referenzbild für die Prädiktion des nächsten P-Bildes.

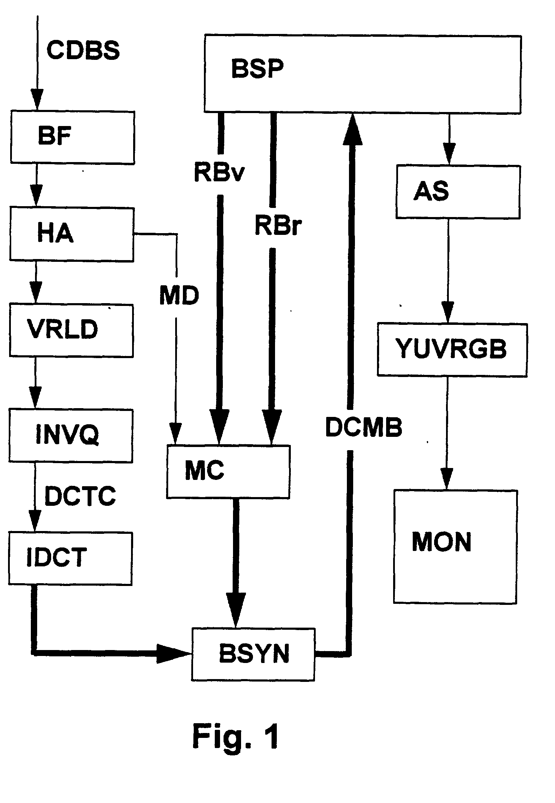

Wie in Fig. 1 gezeigt, wird zur Decodierung eines Bitstroms komprimierter Bilddaten dieser Bitstrom CDBS zunächst in einen Buffer BF geladen, welcher im Falle von MPEG 2 z.B. die Mindestgröße 1,75 Mbit besitzt, aus welchem die Daten mit einer variablen, vom Decoder gesteuerten Rate ausgelesen werden können. In diesem Eingangsdatenstrom liegen die Bilder z.B. in der Reihenfolge
I1, P4, B2, B3, P7, B5, B6, P10, B8, B9, I13, B11, B12, P16, B14, ...
vor, wobei der Buchstabe für den Typ des Bildes steht und der Index für die Stelle im decodierten Bitstrom steht, also die Reihenfolge angibt, in der die Bilder gezeigt werden müssen.

Das heißt, die B-Bilder B2 und B3 (interpolierte Bilder), die zu den Zeitpunkten 2 bzw. 3 gehören, und die durch Interpolation aus den Referenzbildern I1 und P4 zu decodieren sind, folgen bei der Übertragung zeitlich auf die Referenzbilder, welche zu den Aufnahmezeitpunkten 1 und 4 gehören. Wenn im Rahmen dieser Patentanmeldung von zeitlich vorhergehenden bzw. zeitlich nachfolgenden Bildern die Rede ist, ist jedoch immer die Reihenfolge der Aufnahme/Wiedergabe-Zeitpunkte gemeint, in der z.B. das P-Bild P4 auf die B-Bilder B2 und B3 folgt.

Wie anhand der nachstehenden Tabelle 1 gezeigt wird, reichen zur Decodierung des codierten Datenstromes zwei Bildspeicher aus, falls die nachstehende Speicherbelegung verwendet wird:

Dabei wurden Operationen für Formatumwandlungen (interlaced/progressiv, Blockformat/Zeilenformat) im Bildausgabespeicher zunächst nicht berücksichtigt.

Die Erfindung zeigt nun einen Weg zur weiteren Verringerung des Speicherbedarfs auf, so daß weniger als zwei ganze Bild-

**Tabelle 1:**

| Belegung der Bildspeicher beim Stand der Technik | | | | | |
|---|---|---|---|---|---|
| Schritt | Eingang | Decodierung von | Inhalt Bildspeicher A | Inhalt Bildspeicher B | Ausgabe von |
| 1 | l₁ codiert | l₁ | l₁ wird eingeschrieben | | |
| 2 | P₄ codiert | P₄ | l₁ wird ausgelesen | P₄ wird eingeschfieben | l₁ decodiert |
| 3 | B₂ codiert | B₂ | Zugriffe auf l₁ | Zugriffe auf P₄ | B₂ decodiert |
| 4 | B₃ codiert | B₃ | Zugriffe auf l₁ | Zugriffe auf P₄ | B₃ decodiert |
| 5 | P₇ codiert | P₇ | P₇ wird eins schrieben | P₄ wird ausgelesen | P₄ decodiert |
| 6 | B₅ codiert | B₅ | Zugriffe auf P₇ | Zugriffe auf P₄ | B₅ decodiert |
| 7 | B₆ codien | B₆ | Zugriffe auf P₇ | Zugriffe auf P₄ | B₆ decodiert |
| 8 | P₁₀ codiert | P₁₀ | P₇ wird ausgelesen | P₁₀ wird eingeschrieben | P₇ decodiert |
| 9 | B₈ codiert | B₈ | Zugriffe auf P₇ | Zugriffe auf P₁₀ | B₈ decodiert |
| 10 | B₉ codiert | B₉ | Zugriffe auf P₇ | Zugriffe auf P₁₀ | B₉ decodiert |
| 11 | I₁₃ codiert | I₁₃ | I₁₃ wird eingeschrieben | P₁₀ wird ausgelesen | P₁₀ decodiert |
| 12 | B₁₁ codiert | B₁₁ | Zugriffe auf I₁₃ | Zugriffe auf P₁₀ | B₁₁ decodiert |
| 13 | B₁₂ codiert | B₁₂ | Zugriffe auf I₁₃ | Zugriffe auf P₁₀ | B₁₂ decodiert |
| 14 | P₁₆ codiert | P₁₆ | I₁₃ wird ausgelesen | P₁₆ wird eingeschrieben | I₁₃ decodiert |
| 15 | B₁₄ codiert | B₁₄ | Zugriffe auf I₁₃ | Zugriffe auf P₁₆ | B₁₄ decodiert |

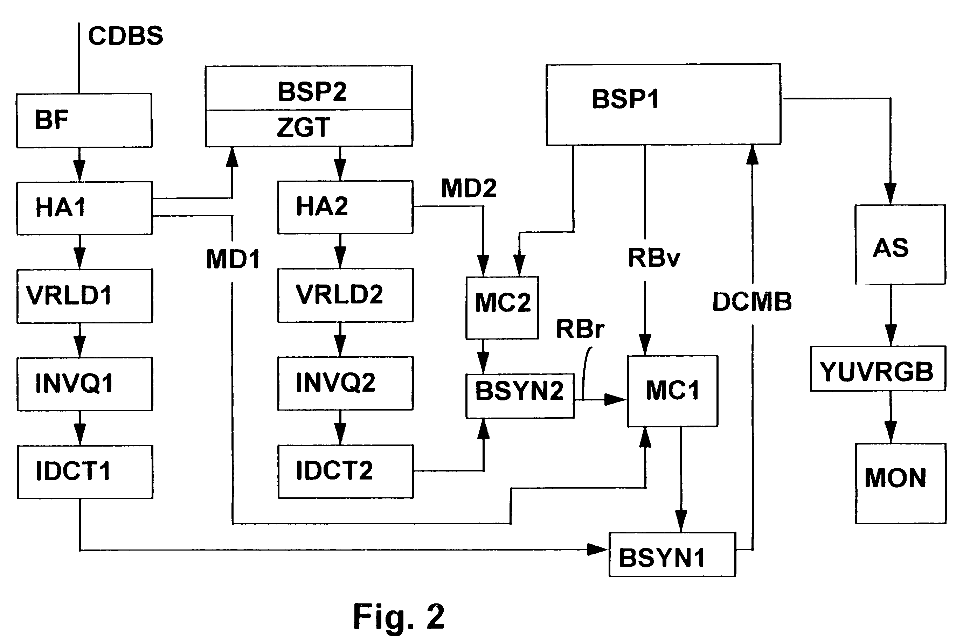

speicher zur Durchführung der bidirektionalen Interpolation benötigt werden. Bei den Verfahren nach dem Stand der Technik wird - wie in Figur 1 gezeigt - der im Buffer BF enthaltene Datenstrom von einer Einrichtung HA zur Headerauswertung insoweit ausgewertet, daß einzelne Makroblöcke aller codierten Bilder anschließend einer Intra-Bild-Decodierung, vorzugsweise in Form einer inversen Quantisierung INVQ und einer inversen Transformation IDCT, unterzogen werden können. Gemäß der vorliegenden Erfindung wird - wie in Figur 2 gezeigt - jeweils ein Referenzbild in komprimierter Form in einem Bildspeicher BSP2 gehalten, welcher über eine Zugriffstabelle ZGT beschrieben bzw. ausgelesen wird. Dem Fachmann ist anhand dieser Schilderungen klar, daß der Speicher BSP1 nicht notwendig physikalisch von den Speicherbereichen des Buffers BF verschieden sein muß, sondern daß der Speicher BSP2 auch lediglich eine logisch andere Zugriffsform auf die Daten des Buffers BF sein kann. Das jeweils andere Referenzbild wird jedoch vollständig decodiert zur Bildsynthese BSYN1,2 verwendet und in einem vollen Bildspeicher BSP1 in unkomprimierter Form gespeichert.

Ein P-Bild Pi wird immer unidirektional (vorwärts) aus dem vorhergehenden I- oder P-Bild ( I(i-b-1) bzw. P(i-b-1)) prädiziert, wobei b die Anzahl der B-Bilder zwischen zwei Referenzbildern bezeichnet. Es genügt daher, das vorangehende Referenzbild unkomprimiert zu speichern, wenn genügend Rechenleistung zur Verfügung steht, um in Echtzeit die für die Interpolation benötigten Bereiche des fehlenden P-Bildes Pi zu berechnen. Dieses P-Bild Pi kann dann solange komprimiert bleiben, bis es selbst ausgegeben werden muß und als Grundlage für das folgende P-Bild P(i+b+1) dient (siehe Figur 2). Auch ein I-Bild I(i) kann solange komprimiert bleiben, bis es selbst ausgegeben werden muß und als Grundlage für das folgende P-Bild dient.

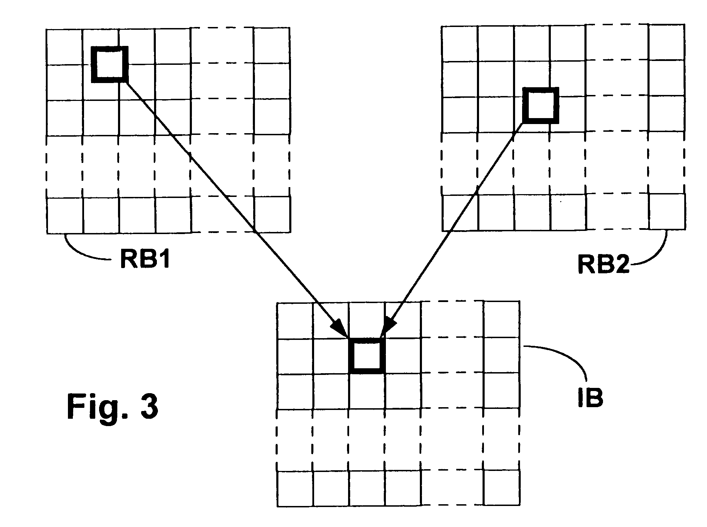

Die Bewegungsinformation für die Prädiktion wird für einzelne Makroblöcke angegeben. Ein Makroblock besteht aus 16 mal 16 Luminanz-Pixeln zuzüglich 2 mal 8 mal 8 Chrominanz-Pixeln im sogenannten 4:2:0-Format. Wenn nun ein Makroblock im B-Bild einen Bewegungsvektor mit Bezug auf das P-Bild Pi enthält, so müssen für die Bewegungskompensation die zugehörigen Makroblöcke des P-Bildes dekomprimiert werden. Der Bewegungsvektor (z.B. bei der Vollbild-Prädiktion) wird sich im allgemeinen auf einen 16 mal 16 Block beziehen, der nicht im Raster der ursprünglichen Makroblöcke liegen muß, sondern im Halbpixelraster verschoben sein kann (Figur 3). Daher müssen für die Rückwärtsprädiktion normalerweise vier Makroblöcke (oder zumindest 9 Blöcke zu je 8 mal 8 Luminanz-Pixeln zuzüglich zwei mal 4 Blöcke zu je 8 mal 8 Chrominanzpixeln) vollständig dekomprimiert werden.

Es ist also eine vierfach höhere Rechengeschwindigkeit bei der Rückwärtsprädiktion gegenüber der eingangs beschriebenen konventionellen MPEG-Decodierung erforderlich (bei Vollbild-Prädiktion). Bei der Dekomprimierung dieser vier Makroblöcke wird auf vier 16 mal 16 Bildblöcke (bzw. im "worst case" bei 16 mal 8-Prädiktion im Halbbild-Modus und bei Halbixelgenauigkeit: acht 17 mal 9 Bildfelder) zugegriffen. Dieser Zugriff stellt kein Problem für die Rechenleistung dar, da die entsprechenden Bilddaten unkomprimiert gespeichert sind. Für die Vorwärtsprädiktion muß außerdem ein Bildblock des unkomprimiert gespeicherten vorangehenden Referenzbildes ( I(i-b-1) bzw. P(i-b-1) ) gelesen werden. Die erforderliche Speicherbandbreite erhöht sich dadurch auf etwa 750 Mbit/s, da pro Makroblock normalerweise ein 16 mal 16-Bildblock für die Vorwärtsprädiktion und vier 16 mal 16-Bildblöcke für die Rückwärtsprädiktion gelesen werden müssen. Dieses Bandbreitenproblem kann durch Integration des Speichers auf dem Prozessor-Baustein entschärft werden.

Eine Voraussetzung für die Anwendung der Erfindung besteht darin, daß auf einzelne Bildblöcke der Referenzbilder direkt zugegriffen werden kann. Daher müssen die komprimierten Daten bezüglich der Adressen der Makroblöcke im Speicher ausgewertet werden (HA). Diese Adressen müssen in Form einer Tabelle (ZGT) gespeichert werden. Außerdem müssen gegebenenfalls vorhandene differentielle Codierungen der Makroblöcke untereinander rückgängig gemacht werden.

Sobald das P-Bild Pi ausgegeben werden muß, wird es auch unkomprimiert abgespeichert. Daher muß soviel Bildspeicher zur Verfügung gestellt werden, daß keine für die Dekompression benötigten Bilddaten des ersten Referenzbildes zu früh überschrieben werden. Deshalb muß zumindest der maximal mögliche Suchbereich, auf den die Bewegungsvektoren referenziert werden können, im Speicher verbleiben. Wenn das Bewegungsvektorfeld des P-Bildes Pi im voraus ausgewertet wird, kann sogar noch weiterer Speicherplatz dadurch eingespart werden, daß nicht mehr benötigte Bereiche frühzeitig überschrieben werden. Dabei kann wiederum die Zugriffstabelle ZGT für eine Dekompression der Makroblöcke in beliebiger Reihenfolge eingesetzt werden. Es sei nochmals hervorgehoben, daß der Speicherbedarf für das komprimierte Referenzbild BSP2 mit dem ohnehin vorhandenen Buffer BF in dem Sinne als Einheit angesehen werden kann, daß die komprimierten Daten nicht zusätzlich in einem weiteren physikalischen Speicher BSP2 gehalten werden müssen, sondern daß der Speicher BSP2 auch lediglich eine logische Zugriffsform auf in dem Buffer BF ohnehin gespeicherte Daten darstellen kann.

Zur Rekonstruktion eines B-Bildes zwischen zwei P- bzw. I-Bildern (i.a. zwischen zwei Referenzbildern) werden aus dem komprimierten Datenstrom lediglich gerade die Bildbereiche decodiert, die momentan für die Bildausgabe benötigt werden. Da die Erzeugung der Bilddaten blockweise erfolgt, die Wiedergabe aber zeilenweise, muß der Ausgabespeicher mindestens zwei Blockzeilen aufnehmen können. Um außerdem Bilder, die als Vollbild decodiert sind, im Zeilensprungverfahren, also als 2 Halbbilder, ausgeben zu können, muß ein Halbbildspeicher vorgesehen werden (Re-Interlacing).

Im Vergleich zu den derzeit bekannten Verfahren müssen gemäß der vorliegenden Erfindung bei jedem B-Bild sowohl die B-Bilddaten als auch die Daten des nachfolgenden Referenzbildes decodiert werden, daher ist entweder eine schnellere Decodier-Hardware erforderlich, oder diese Hardware muß für die Parallelverarbeitung vervielfacht werden. Der Mehraufwand an Chipfläche im Falle einer Aufdoppelung der Decodier-Hardware ist jedoch möglicherweise geringer als der Gewinn an Chip-Fläche durch die Reduzierung der benötigten Speicherkapazität.

Bei Verwendung der derzeit bekannten Verfahren zur Decodierung werden für die Speicherung der Referenzbilder im CCIR 601 Format für Ausgabespeicher und Eingangspuffer insgesamt ca. 16 Mbit Speicherkapazität benötigt. Mit dem Verfahren gemäß der vorliegenden Erfindung reduziert sich der maximale Bedarf auf 4,75 Mbit für den ersten Referenzspeicher, 2 Mbit für den Eingangsbuffer einschließlich 600 kbit für eine zusätzliche Überlaufreserve, 1,75 Mbit für das komprimierte Referenzbild, 34 kbit für die Zugriffstabelle und 270 kbit für die Speicherung von zwei Makroblockzeilen im Ausgangsspeicher. Mit Hilfe des hier beschriebenen Verfahrens kann also der Speicherbedarf auf etwa 11,6 Mbit oder weniger reduziert werden.

Der Ablauf der Decodierung läßt sich wie folgt beschreiben (wobei im Falle der Anwendung auf der Erfindung auf einen Encoder der Decoderteil des Encoders entsprechend ausgeführt werden muß): Der Datenstrom einer Bildgruppe beginnt mit Header-Informationen (GOP-Header). Es folgen dann die Daten für ein I-Bild. Aus diesen Daten wird das erste Referenzbild rekonstruiert und diese Bilddaten im ersten Referenzbildspeicher (Referenzspeicher) abgelegt. Es folgen - so vorhanden - die Daten für das P-Bild. Diese Daten werden zwar ausgewertet, jedoch wird das zweite Referenzbild im Falle des Vorhandenseins von B-Bildern nicht sofort rekonstruiert, sondern es wird lediglich in einer Zugriffstabelle (ZGT) festgehalten, an welchen Stellen sich die Header-Informationen (Picture-Header, Slice-Header) und die Makroblock-Informationen befinden. In der Zugriffstabelle muß für jeden Makroblock ein Eintrag vorhanden sein.

Figur 2 zeigt ein vereinfachtes Blockdiagramm eines Decoders mit reduziertem Speicherbedarf gemäß der vorliegenden Erfindung. Dabei ist wesentlich, daß die Daten für den zweiten Referenzbildspeicher (Referenzspeicher) im Speicher BSP2 komprimiert gehalten sind und daß auf Slice- und Makroblockebene auf diese Daten zugegriffen werden kann (Die Speicher BSP2 und BF können dabei als ein physikalischer Speicher realisiert sein). Um dies zu ermöglichen, müssen die zugehörigen Adressen in einer Zugriffstabelle festgehalten werden. Nach der Analyse der Daten für das P-Bild folgen die Daten für das erste B-Bild, welches das zweite darzustellende Bild innerhalb der Bildgruppe ist. Die einzelnen Makroblöcke der B-Bilder werden, wie bereits oben beschrieben, aus der bewegunsgkompensierten bidirektionalen Interpolation ausgehend von benachbarten Referenzbildern und dem übertragenen Prädiktionsfehler rekonstruiert. Das bedeutet, daß jeweils aus dem 1. und dem 2. Referenzbild ein gegenüber dem zu rekonstruierenden Makroblock verschobener Block der Größe 16 mal 16 Bildpunkte zur Verfügung stehen muß (siehe Figur 3).Während die benötigten Bilddaten des 1. Referenzbildes im 1. Referenzbildspeicher BSP1 bereits zur Verfügung stehen, müssen die entsprechenden Daten für den zweiten Referenzbildspeicher erst rekonstruiert werden. Wie aus Figur 3 zu entnehmen ist, sind dies i.a. vier Makroblöcke, deren Lage im Referenzbild sich aus der Position des zu rekonstruierenden Makroblocks im B-Bild und des dazugehörigen Bewegungsvektors ergibt. Die für diese Rekonstruktion notwendigen Daten werden dem Speicher BSP2 entnommen, die zugehörigen Adressen stehen in der Zugriffstabelle (ZGT). Für die Rekonstruktion eines jeden Makroblockes in einem B-Bild sind demnach normalerweise jeweils vier Makroblöcke des 2. Referenzbildes zu rekonstruieren. Die rekonstruierten B-Bilder werden über den Ausgabespeicher ausgegeben.

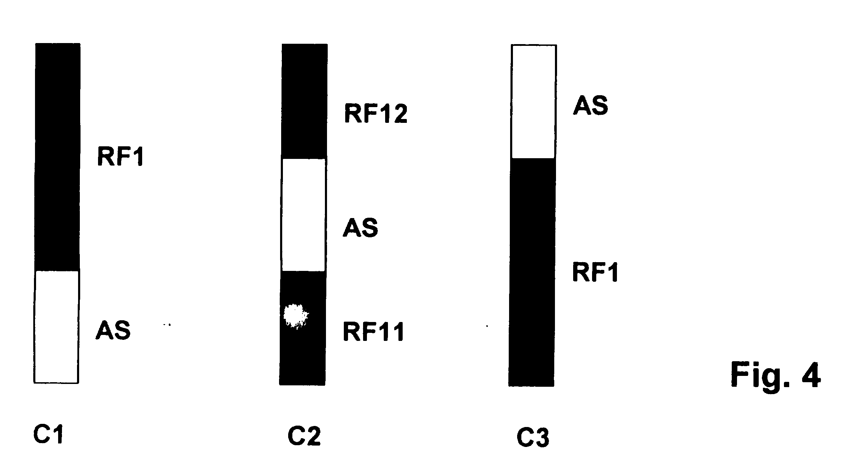

Sind alle B-Bilder zwischen zwei Referenzbildern abgearbeitet und wiedergegeben, erfolgt eine erneute Rekonstruktion des gesamten zweiten Referenzbildes zum einen für die Bildausgabe, zum anderen, um für den nächsten Zyklus (P B B .. bzw. I B B) als erstes Referenzbild zu dienen. Die Daten hierfür werden zuerst in dem Speicherbereich, der zuvor für den Ausgabespeicher genutzt worden ist abgelegt. Da dieser Bereich zu klein ist, um das gesamte Referenzbild aufzunehmen (Halbbildspeicher), wird anschließend der Bereich überschrieben, der zuvor für das erste Referenzbild im vorhergehenden Zyklus benutzt worden ist. Der nach dieser Rekonstruktion nicht mehr benötigte Speicherbereich wird für die nächsten Bilder als Ausgabespeicher genutzt (siehe Figur 4).

Auf keinen Fall darf der Speicherbereich, der zuvor für den 1. Referenzbildspeicher verwendet worden ist, direkt überschrieben werden, da die Daten für die Rekonstruktion des prädizierten Bildes zunächst noch benötigt werden. Aufgrund der Bewegungskompensation kann auch bei der Rekonstruktion einer tieferliegenden Blockzeile noch auf Daten zurückgegriffen werden, die um den Maximalwert der Vertikalkomponente des Bewegungsvektors höher liegen (127 Zeilen bei ISO/IEC 13818-2). Das bedeutet, daß dieser Bereich auf jeden Fall bereit gehalten werden muß, auch wenn der Ausgabespeicher durch andere Maßnahmen noch weiter reduziert werden sollte.

Im Rahmen dieser Patentanmeldung wurden die folgenden Veröffentlichungen zitiert:
[1] D.J. Le Gall, "The MPEG video compression algorithm", Signal Processing: Imaqge Communication 4 (1992) 129-140.
[2] International Standard ISO/IEC 11172-2: Coding of moving pictures and associated audio, ISO/MPEG, 1993(E)
[3] Draft International Standard ISO/IEC 13818-2: Generic coding of moving pictures and associated audio, 25. März 1994.
[4] M. Bierling, "Displacement estimation by hierarchical block matching", 3rd SPIE Symp. on Visual Commun., Cambridge, MA, November 1988.

## Patentansprüche

1. Verfahren zur Decodierung komprimierter Video-Daten mit reduziertem Speicherbedarf nach dem Prinzip der Differenz-Puls-Code-Modulations-Codierung mit bewegungskompensierter Prädiktion, wobei interpolierte Bilder aus einem zeitlich vorhergehenden und einem zeitlich nachfolgenden Referenzbild durch bidirektionale bewegungskompensierte Interpolation ermittelt werden, dadurch gekennzeichnet, daß für die Rekonstruktion eines interpolierten Bildes nur eines der beiden Referenzbilder in vollständig dekomprimierter Form benötigt wird, wogegen von dem anderen Referenzbild lediglich jeweils diejenigen Bildbereiche dekomprimiert werden, welche mit dem jeweils zu ermittelnden Bildbereich des interpolierten Bildes unter Berücksichtigung einer der Bewegungskompensation entsprechenden Verschiebung überlappen.

2. Verfahren nach Anspruch 1, bei dem zur Rekonstruktion und Ausgabe des zweiten Referenzbildes im Anschluß an die Ausgabe der interpolierten Bilder zunächst der für die Bildausgabe vorgesehene Speicherplatz benutzt wird, um das zweite Referenzbild unkomprimiert zu speichern.

3. Verfahren nach Anspruch 2, bei dem
- im Anschluß daran der Speicher für das erste Referenzbild benutzt wird, um den verbleibenden Rest des zweiten Referenzbildes unkomprimiert zu speichern,
- der nicht mehr benötigte Rest des Speichers für das erste Referenzbild als Ausgabespeicher für die nachfolgenden Bilder benutzt wird und bei dem
- der Speicherbereich, der jetzt das vollständig unkomprimierte zweite Referenzbild aufgenommen hat, das erste Referenzbild für die Decodierung der zeitlich nachfolgenden interpolierten Bilder enthält.

4. Schaltungsanordnung zur Decodierung komprimierter Video-Daten mit folgenden Merkmalen:
a)es ist eine Einrichtung zur Zwischenspeicherung von ankommenden, komprimierten Video-Daten vorgesehen, aus der diese Video-Daten mit variabler Datenrate ausgelesen werden können;
b)es sind Mittel zur Decodierung einzelner Bildbereiche aus den komprimierten Video-Daten vorgesehen;
c)es sind Mittel zur Erzeugung interpolierter Bilder aus einem zeitlich vorhergehenden und einem zeitlich nachfolgenden Referenzbild vorgesehen, welche Mittel zur Speicherung von Daten dieser Referenzbilder umfassen;
d)in diesen Mitteln zur Speicherung wird zur Decodierung eines interpolierten Bildes ein voll decodiertes erstes Referenzbild gespeichert;
e)es sind Mittel zur Decodierung derjenigen zur bidirektionalen Interpolation benötigten Bildbereiche eines zweiten Referenzbildes vorgesehen, welche mit dem jeweils zu ermittelnden Bildbereich des interpolierten Bildes unter Berücksichtigung einer der Bewegungskompensation entsprechenden Verschiebung überlappen.

## Claims

1. Method for decoding compressed video data with a reduced memory requirement in accordance with the principle of differential pulse code modulation coding with movement-compensated prediction, interpolated frames being determined from a chronologically preceding and a chronologically succeeding reference frame by means of bidirectional movement-compensated interpolation, characterized in that only one of the two reference frames is required in a completely decompressed form in order to reconstruct an interpolated frame, whereas only those respective picture areas of the other reference frame are decompressed which overlap with the respective picture area to be determined of the interpolated frame, taking account of a displacement corresponding to the movement compensation.

2. Method according to Claim 1, in which, for the purpose of reconstructing and outputting the second reference frame, after the interpolated frames are output, the memory space provided for the video output is initially used to store the second reference frame in an uncompressed form.

3. Method according to Claim 2, in which
- after this the store for the first reference frame is used to store the remainder of the second reference frame in-an uncompressed form,
- the remainder of the store for the first reference frame which is no longer required is used as an output memory for the succeeding frames, and in which
- the memory area which has now accommodated the completely uncompressed second reference frame contains the first reference frame for the decoding of the chronologically succeeding interpolated frames.

4. Circuit arrangement for decoding compressed video data having the following features:
a) a device for buffering incoming, compressed video data is provided, from which device these video data can be read at a variable data rate;
b) means for decoding individual picture areas from the compressed video data are provided;
c) means for producing interpolated frames from a chronologically preceding and a chronologically succeeding reference frame are provided, which include means for storing data of these reference frames;
d) a completely decoded first reference frame is stored in these storage means for the purpose of decoding an interpolated frame;
e) means for decoding those picture areas, which are required for the bidirectional interpolation, of a second reference frame are provided, which means overlap with the respective picture area to be determined of the interpolated frame, taking account of a displacement corresponding to the movement compensation.

## Revendications

1. Procédé pour le décodage de données vidéo comprimées, avec un encombrement en mémoire réduit et selon le principe de la modulation par impulsions et codage différentiel avec une prédiction à compensation du mouvement, des images interpolées étant déterminées par une interpolation bidirectionnelle à compensation du mouvement à partir d'une image de référence précédente et d'une image de référence suivante, caractérisé par le fait que, pour la reconstitution d'une image interpolée, on n'a besoin que d'une seule des deux images de référence sous une forme entièrement décomprimée tandis qu'on ne décomprime de l'autre image de référence que les zones d'image qui chevauchent la zone d'image à déterminer de l'image interpolée en tenant compte d'un déplacement correspondant à la compensation du mouvement.

2. Procédé selon la revendication 1, dans lequel, pour la reconstitution et la sortie de la deuxième image de référence à la suite de la sortie des images interpolées, on utilise d'abord la place mémoire prévue pour la sortie d'image afin de mémoriser la deuxième image de référence sous forme non comprimée.

3. Procédé selon la revendication 2, dans lequel
- on exploite ensuite la mémoire destinée à la première image de référence pour mémoriser sous forme non comprimée le reste de la deuxième image de référence,
- on exploite le reste, devenu inutile, de la mémoire destinée à la première image de référence comme mémoire de sortie pour les images suivantes, et
- la zone de mémoire, qui a maintenant enregistré la deuxième image de référence entièrement non comprimée, contient la première image de référence pour le décodage des images interpolées suivantes.

4. Montage pour le décodage de données vidéo comprimées, ayant les caractéristiques suivantes :
a) il est prévu un dispositif qui est destiné à la mémorisation temporaire de données vidéo comprimées arrivant et à partir duquel ces données vidéo peuvent être lues avec des débits de données variables ;
b) il est prévu des moyens destinés au décodage de zones d'image individuelles à partir des données vidéo comprimées ;
c) il est prévu des moyens qui sont destinés à produire des images interpolées à partir d'une image de référence précédente et d'une image de référence suivante et qui comprennent des moyens pour la mémorisation des données de ces images de référence ;
d) dans ces moyens pour la mémorisation, il est mémorisé pour le décodage d'une image interpolée une première image de référence entièrement décodée ;
e) il est prévu des moyens destinés au décodage de celles des zones de mémoire, nécessaires à l'interpolation bidirectionnelle, d'une deuxième image de référence qui chevauchent la zone d'image à déterminer de l'image interpolée en tenant compte d'un déplacement correspondant à la compensation du mouvement.
